# EUROPEAN PATENT APPLICATION

(11) **EP 4 343 276 A1**
(43) Date of publication of application: **27.03.2024**
(21) Application number: 22196882.9
(22) Date of filing: 21.09.2022
(51) Int. Cl.: G01B 11/10, A24C 5/34

(54) **A METHOD FOR MEASURING A DIAMETER OF A CONTINUOUS ROD OF TOBACCO INDUSTRY PRODUCTS**

(71) Applicant: International Tobacco Machinery Poland Sp. z o.o., 26-600 Radom (PL)
(72) Inventor: HOFFMANN, Hans-Reiner, 41516 Grevenbroich (DE)
(74) Representative: Markieta, Jaroslaw Franciszek

(57) **Abstract**

A method of measuring a diameter of a continuous rod (CR) of tobacco industry products (R) comprising steps of: determining measuring sectors (S1, S2, S3, S4) on the continuous rod (CR) in relation with structure of a product (R), determining measuring time windows (T1, T2, T3, T4) in relation with structure of a product (R) and a transfer speed (v) of the continuous rod (CR), measuring the diameter in the determined measuring sectors (S1, S2, S3, S4) in determined measuring time windows (T1, T2, T3, T4), where determined measuring time windows (T1, T2, T3, T4) are synchronized with determined measuring sectors (S1, S2, S3, S4).

## Description

The present invention relates to a method and system for determining a diameter of a rod-like article of the tobacco industry.

In the state of the art there are known methods of measuring of the diameter of the rod-like articles with usage of optical systems.

The patent application US2006109485A1 discloses a system for measuring a diameter of a rod-like object of the tobacco industry with a use of light beams. The method disclosed is based on the concept that the rod-shaped article is illuminated by all the light sources at one point at the same time so that light is scattered from the surface of the article at the illuminated point and the scattered light is detected by sensors. One sensor is hereby respectively assigned to one light source so that the profile of a partial surface of the entire circumferential surface of the article illuminated by a light source is determined by one sensor. In order to be able to determine the diameter at a predetermined point of the article at the same time and without shade areas, it is necessary for several light sources to illuminate the article at this point. A rapid and reliable determination of the diameter of the article is thus ensured. Furthermore, several light sources are necessary in order to cover the article completely, i.e., without shading or the like.

In the tobacco industry products like filter rods and tobacco rods are produced by cutting a continuous rod which is moving at high speed by means of a rotary cutting head of a cutting unit. The continuous rod comprises filling material wrapped with a wrapping material. Filter rods may be filled with one type of filtering material or a few types of material (combined filters), among others also granular material. Filter rods may comprise aroma capsules or some other inserts. Tobacco rods may comprise shredded tobacco or reconstituted tobacco and also some special inserts e.g. metal inserts. Thus along the continuous rod of the tobacco industry there are repeated sections the diameters of which may differ because stiffness or hardness of the sectors or segments differs.

The problem present in the tobacco industry is a determination of a diametric profile of a rod-like article e.g. an endless rod of the tobacco industry product. A diametric profile is a profile showing a distribution of a diameter along the length of a rod-like article of the tobacco industry. Further the problem faced by the manufacturers present in the prior art can be defined as constant or repeated measuring of an object present in the measuring field of sensors in the course of production.

The invention is defined in claim 1.

Preferably a method of measuring a diameter of a continuous rod of the tobacco industry products according to the invention is comprising steps of: determining measuring sectors on the continuous rod in relation with structure of a product, determining measuring time windows in relation with structure of a product and a transfer speed of the continuous rod, measuring the diameter on the determined measuring sector in determined measuring time windows, where determined measuring time window is synchronized with determined measuring sector.

Preferably in the method according to the invention the synchronization between the determined measuring sector and determined measuring time window is obtained by using a signal representing a cutting moment.

Preferably in the method according to the invention the synchronization between the determined measuring sector and determined measuring time window is obtained by using a signal representing a position of a front end of the continuous rod of the tobacco industry.

Preferably in the method according to the invention, the measuring within the measuring time windows is effected at first frequency.

Preferably in the method according to the invention, the determined measuring sector covers the full length of the product.

Preferably the method according to the invention measuring comprises more than one measuring sector and more than one measuring window.

Preferably the method according to the invention measuring comprises more than one measuring sectors and determined measuring time windows overlap each other.

Preferably in the method according to the invention measuring frequency or measuring accuracy is different in a different measuring time windows.

Advantageously the present method allows to measure selective sectors of the continuous rod of tobacco industry, therefore the measurement results can be assigned to particular sector or sectors of the manufactured product according to its structure and can be selective, which allows a better quality control and provides a more flexible production system.

The new proposed method for measuring a diameter of a continuous rod of the tobacco industry product is capable of maintaining the measurement accuracy at the designed level in a an environment of heavy dust in factory facilities at a high frequency of measurements.

The invention is described below in detail in preferred embodiments in relations to the figures:
- Fig. 1: shows a measurement system used in the method according to the invention;
- Fig. 2: shows a structure of the continuous rod and sectors where measurements are effected in a first embodiment;
- Fig. 3: shows a sequence of measuring time windows for the continuous rod of Fig. 2 transported at speed v1;
- Fig. 4: shows a sequence of measuring time windows for the continuous rod of Fig. 2 transported at speed v2;
- Fig. 5: shows a structure of the continuous rod and sectors where measurements are effected in a second embodiment;
- Fig. 6: shows a sequence of measuring time windows for the continuous rod of Fig. 5;
- Fig. 7: shows a structure of the continuous rod and sectors where measurements are effected in a third embodiment;
- Fig. 8: shows a sequence of measuring time windows for the continuous rod of Fig. 7;
- Fig. 9: shows a measurement unit used in the system used in the method according to the invention.

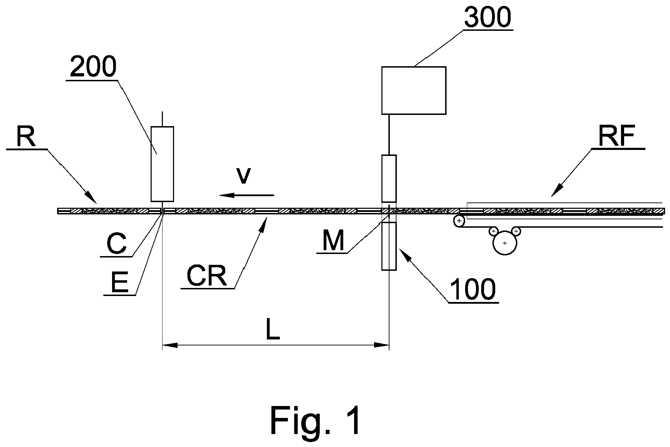

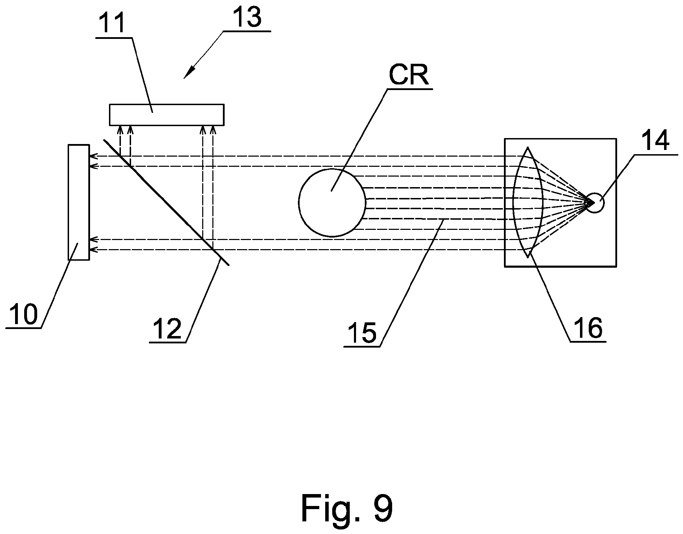

Fig. 1 shows a fragment of a machine for manufacturing products of tobacco industry, namely combined filter rods R. A continuous rod CR is formed in a rod forming unit RF and cut into single products R. Fig. 1 shows a measurement system used in the method according to the invention. The measurement system further explained in relation to Fig. 9 comprises a measurement unit **100**, a cutting unit **200**, and a computing unit **300**. The measurement unit **100** comprises a sensor unit **13** with two sensors **10**, **11** and a light source **14**. The measurement unit **100** runs measurement at a measurement point **M** that is at a distance **L** from a cutting point **C**, where the cutting unit **200** cuts a rod-like article in a form of a continuous rod **CR** of tobacco industry products **R**. A continuous rod **CR** of tobacco industry products travels with a speed **v** in a direction from the measurement point **M** towards the cutting point **C**.

This embodiment of a method of measuring a diameter of a rod-like article of the tobacco industry comprises steps of transporting the continuous rod **CR** comprising products **R** of the tobacco industry with a transporting speed **v**, measuring a diameter of the continuous rod **CR**. The measurement takes place in a determined measuring time window **T** when the measuring sector **S** is transported in the measuring field of the measurement unit **100** i.e. the determined sector **S** and the determined measuring time window **T** are synchronized. Synchronization of the determined measuring sector **S** and the determined measuring time window **T** can be obtained by using a cutting head control signal, definition of structure of the product **R**, distance between cutting head of the cutting unit **200** and the measurement unit **100**, transporting speed **v**, or by measurement of the position of the front end of the continuous rod **CR**, or by any combination of these signals or values.

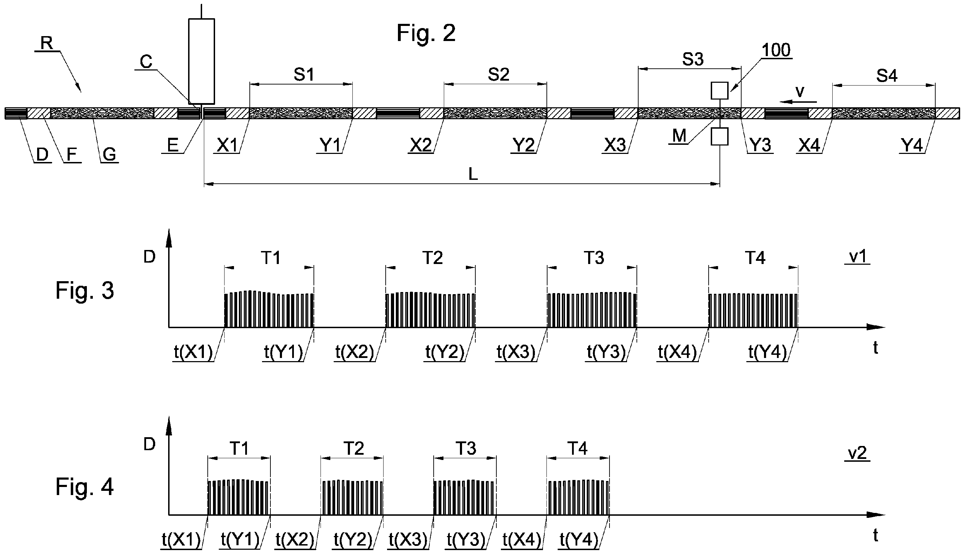

Fig. 2 shows a continuous rod **CR** with its internal structure of products **R** composed of different segments **D**, **F**, **G**. The determined measuring sector **S** may be selected to effect measurement within each product **R**, in the presented embodiment sector **S** covers the length of the segment **G**. As the continuous rods **CR** comprises many products **R** to be separated by the cutting head, Fig. 2 shows four determined measuring sectors **S1**, **S2**, **S3**, **S4.** Each of the determined measuring sectors starts in point **X** and ends in point **Y**, which can be chosen according to the needs and in relation to the structure of the product **R**. Hence the first determined measuring sector **S1** starts at point **X1** and ends at point **Y1**, and so on.

Fig. 3 shows a graph with measuring results **D** representing diameter of the continuous rod **CR** in the determined measuring time windows **T1**, **T2**, **T3**, **T4**. Each measuring time window starts at a point in time **T(X)** when point **X** of the continuous rod **CR** is in the measuring point **M** in the measuring field of measurement unit **100**, and consequently ends at the point on the time axis representing moment when the point **Y** is in the measuring point **M** in the measuring filed of the measurement unit **100**.

The measuring of the diameter is performed at first frequency in the determined measuring sectors **S**. The first frequency can be called a sampling frequency defining the time resolution of measuring as it represents the number of individual measurements taken in a unit of time. The increase in time resolution might be achieved either by increase of sampling frequency in relation to the speed **V** of the transported rod-like article or by decrease of the speed **V** and maintaining the sampling frequency constant.

Fig. 4 shows how the change in the speed of transporting the continuous rod **CR** influences the length of the determined measuring time windows **T**, the determined measuring time windows **T** become shorter and the number of samples per time window is smaller, when the **v2** is higher than **v1**.

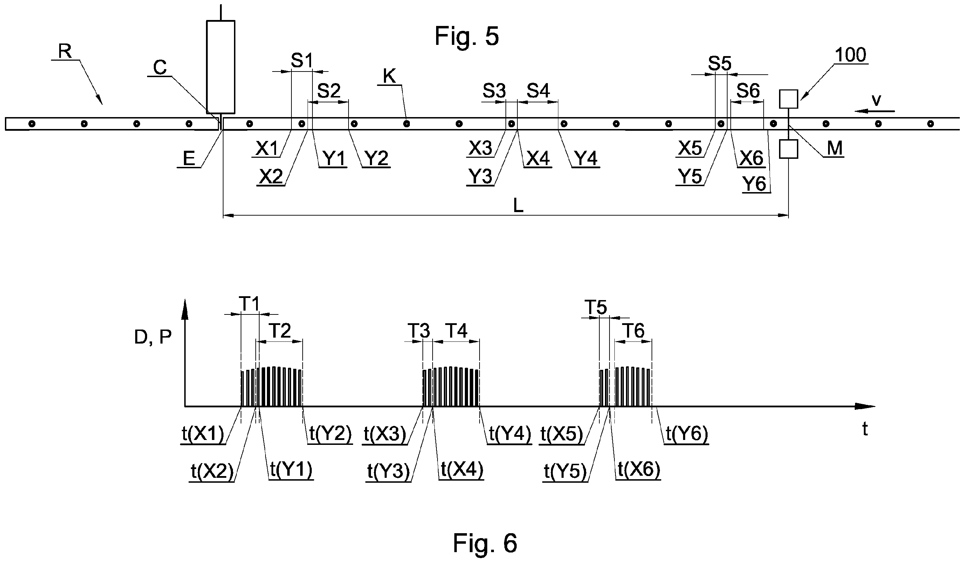

Fig. 5 shows a fragment of another continuous rod-like article **CR**, namely a continuous filter rod provided with evenly laid inserts **K** e.g. aroma capsules or pellets arranged along the length of the rod, a measuring unit **100** and a cutting unit **200** is presented. The second embodiment of a method of measuring a diameter of a rod-like article of the tobacco industry comprises steps of transporting the continuous rod **CR** comprising products **R** of the tobacco industry with a transporting speed **v**, measuring a diameter of the continuous rod **CR**, at selected position or in a determined sector **S** of the continuous rod **CR**. Similarly the measurement takes place in a determined measuring time window **T** when the measuring sector **S** is transported in the measuring field of the measurement unit **100** i.e. the determined sector **S** and the determined measuring time window **T** are synchronized. Fig. 5 shows six determined measuring sectors **S1**, **S2**, **S3**, **S4**, **S5**, **S6**. Sectors **S1**, **S3**, **S5** relate to the diameter of the continuous rod **CR** where inserts K are located. Sectors **S2**, **S4**, **S6** relate to the diameter of the continuous rod **CR** between the inserts **K**. Each of the determined measuring sectors starts at point **X** and ends at point **Y**, which can be chosen according to the needs and in relation to the structure of the product **R.** Hence the first determined measuring sector **S1** starts at point **X1** and ends at point **Y1**, and so on. In the first measuring sector **S1** and in the second measuring sector **S2** diameter is measured. Fig. 6 presents time windows **T1**, **T2**, **T3**, **T4**, **T5**, **T6** related to the sectors **S1**, **S2**, **S3**, **S4**, **S5**, **S6**. The sectors **S1** and **S2** overlap, time windows **T1** and **T2** presented in Fig. 6 also overlap. The next sectors, namely the third sector **S3** and fourth sector **S4** adjoin, time windows **T3** and **T4** in Fig. 6 also adjoin. The fifth sector **S5** and sixth sector **S6** are separated, time windows **T5** and **T6** in Fig. 6 are also separated. Any combination of variants of relation between neighboring sectors S and time windows **T** as presented above may be effected during production or only one of them.

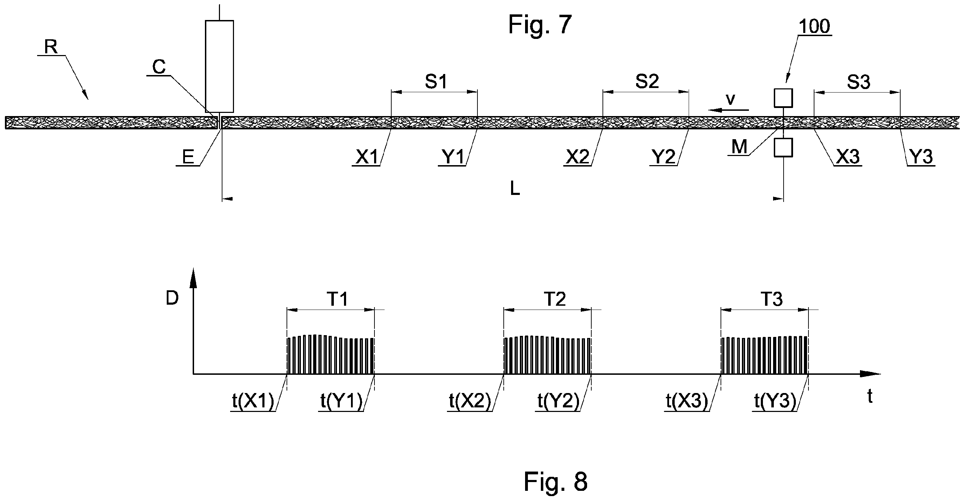

Fig. 7 shows a fragment of another continuous rod-like article **CR**, namely a continuous tobacco rod, a measuring unit **100** and a cutting unit **200** is presented. The third embodiment of a method of measuring a diameter of a rod-like article of the tobacco industry comprises steps of transporting the continuous rod **CR** comprising products **R** of the tobacco industry with a transporting speed **v**, measuring a diameter of the continuous rod **CR**, at selected position, in this embodiment at sectors **S** located at ends of products **R**. Sectors **S** may cover the whole length of the product **R**. Similarly to the previous embodiments the determined sectors **S** and the determined measuring time windows **T** are synchronized. Fig. 7 shows three determined measuring sectors **S1**, **S2**, **S3**. Each of the determined measuring sectors starts at point **X** and ends at point **Y**, which can be chosen according to the needs and in relation to the structure of the product **R** similarly to the previous embodiments. Fig. 8 presents time windows **T1**, **T2**, **T3** related to the sectors **S1**, **S2**, **S3.**

In one of the embodiments the determined measuring sector **S** covers the full length of the product, the measuring systems knows what part of the product is measured at any given time.

Preferably the method of the invention measuring a diameter comprises more than one measuring sector and/or more than one measuring window. This can be achieved by a single measuring unit or with additional measuring unit not shown in the drawings.

Preferably in the method according to another embodiment there is more than one measuring sector and the measuring sectors overlap each other.

Preferably in the method of measuring a diameter of the invention there is more than one measuring time window and the measuring windows overlap each other.

Preferably in the method of measuring a diameter of the invention frequency is different in a different measuring time windows.

In preferred embodiment of the method according to invention comprises further the second sensor unit and a further step of measuring a diameter with second frequency. This can be done in the same determined measuring sector or in a different measuring sector. In yet another preferred embodiment the second measurement is effected with a second accuracy.

In yet preferred embodiment the first measurement is a diameter measurement of the first type, and the second measurement type is a diameter measurement of the second type. The first type of measurement can be for example an analogue measurement where a voltage at the output of the first sensor is proportional to the diameter of the rod-like article **CR**. The characteristics of the sensor need not to be linear and may be described by any of convenient functions. While the measurement of the second type may be digital or also analogue with different sensor properties or different sensor characteristics.

In another embodiment the first measuring type is using a laser analog sensor, preferably a photodiode, and the second measuring type is using an optical digital sensor, preferably a CCD sensor.

The first sensor preferably operates with a first frequency in a range from 20 kHz to 200 kHz, preferably 100kHz and the transferring speed V is in a range from 50 to 600 m/min. The second sensor preferably operate with a second frequency in a range of 0.5 kHz to 3 kHz, preferably 1 kHz, and the transferring speed V is in a range from 50 to 600 m/min. The second frequency is smaller than the first frequency, and the first accuracy is smaller than the second accuracy, and the results of the second measuring of the diameter are used to correct the first results of measuring a diameter. The second frequency can be called a correcting frequency as it can be used to update the characteristics of the first sensor in response to a presence of the systematic error detected by the second sensor.

In preferred embodiment the sensor unit is comprising a set of three individual sensors of the first type arranged at 120° from each other. In yet preferred embodiment the sensor unit is comprising a set of six individual sensors of the first type arranged at 60° from each other and/or the sensor unit is comprising one, two or three sensors of the second type.

The correcting frequency is in a range from 10 Hz to 0.001 Hz, preferably at 0,1 Hz.

Both the first and second sensor receives the same beam of light from the light source S and the light before reaching the sensor of the type is split into two beams with a beam splitter, and one of the beams reach the sensor of the first type, while the other reached the sensor of the second type.

Fig. 9 is a schematic representation of the measurement principle of a measuring unit. A light source **14** emits a collimated beam of light **15** of a selected wavelength. The light source maybe a laser light source emitting visible light or infrared light. The beam of light is directed by the optical unit **16** towards the rod-like article **CR** in the measuring direction. The width of light beam **15** is selected so it is bigger than a diameter of the measured object, so the light beam **15** reaches the first sensor **10** above and below the measured object i.e. rod-like article **CR**. Before reaching the first sensor **10** the light beam is split by the half-transmitting mirror **12** so the light beam reaches also the second sensor **11**.

In the preferred embodiment a method for measuring a diameter of a continuous rod of the tobacco industry product as rod-like article **CR** comprising steps of transferring a continuous rod via a sensor unit comprising a first sensor **10** and a second sensor **11**. The first and second sensor being an analogue sensors, while in other embodiments the digital sensors can be used. A first frequency of operation of the first sensor **10** is higher than a second frequency of operation of the second sensor **11**. The next step is calculating a diameter of the transferred continuous rod **CR** by means of a computing unit which receives signals from the first and second sensor. In the preferred embodiment the diameter of the continuous rod **CR** is calculated on basis of a signal of the first sensor **10** using a characteristics where diameter is related to a value of the signal produced by the first sensor **10**.

The characteristics of the sensor is a function that describes how the measured physical property is translated into analog electrical signal i.e. voltage on the output of the sensor and how this electrical signal is translated into measured value i.e. a diameter of the product **R**. There are at least two ways of changing sensor characteristics either on analog side by modification of the analog voltage or later on the digital side where the diameter is already measured in a form of digital correction.

Next step of the method is calculating the diameter of the continuous rod on basis of a signal produced by the second sensor, where diameter is related to the signal produced by the second sensor, and comparing the diameter measured by the first sensor and the diameter measured by the second sensor. In the preferred embodiment the next step comprises altering the characteristics of the first sensor **10** in case the measured diameter by the first sensor is different from the diameter of the same point on the continuous rod measured by the second sensor **11** such that value of the signal produced by the first sensor **10** is related to the diameter measured by the second sensor **11**.

The first frequency is in a range from 20kHz to 200kHz, preferably 100kHz. While the second frequency is in a range of 0.5kHz to 3kHz, preferably 1kHz.

In another preferred embodiment the continuous rod of tobacco industry product CR is a continuous rod of multi-segment rod-shaped tobacco industry products, and the first frequency is selected in relation to the speed **v** to obtain at least one sample of the first accuracy per segment, and the second frequency is selected to obtain at least one sample of the second accuracy per multi-segment tobacco industry product.

In yet another embodiment the altering of the characteristics of the first sensor is performed with a correcting frequency smaller than the second frequency. While the correcting frequency is in a range from 0.001Hz to 10Hz, preferably at 0.1 Hz.

In the preferred embodiment the light beam before reaching the sensor of the type is split into two beams with a beam splitter **12**, and one of the beams reaches the first sensor **10**, while the other reaches the second sensor **11**.

In a preferred embodiment a measuring system for measuring a diameter of a continuous rod of the tobacco industry comprises a sensor unit comprising a first sensor **10** and a second sensor **11**, the first sensor being an analogue sensor, the second sensor being an analogue sensor, frequency of operation of the first sensor **10** is higher than frequency of operation of the second sensor **11**. System further comprises a computing unit arranged to receive signals from the first sensor and the second sensor and calculates a diameter of the continuous rod. The computing unit is arranged to calculate the diameter of the continuous rod on basis of signal of the first sensor **10** using a characteristics where calculated diameter is related to a value of signal produced by the first sensor. The computing unit is arranged to calculate the diameter of the continuous rod on basis of signal produced by the second sensor **11**, where the diameter is related to the signal produced by the second sensor **11**. The computing unit is arranged to alter the characteristics of the first sensor **10** in case the measured diameter by the first sensor **10** is different from the diameter of the same point on the continuous rod measured by the second sensor **11** such that value of the signal produced by the first sensor **10** is related to the diameter measured by the second sensor **11**.

## Claims

1. A method of measuring a diameter of a continuous rod (CR) of tobacco industry products (R) comprising
steps of:
determining measuring sectors (S1, S2, S3, S4) on the continuous rod (CR) in relation with structure of a product (R),
determining measuring time windows (T1, T2, T3, T4) in relation with structure of a product (R) and a transfer speed (v) of the continuous rod (CR),
measuring the diameter in the determined measuring sectors (S1, S2, S3, S4) in determined measuring time windows (T1, T2, T3, T4), where determined measuring time windows (T1, T2, T3, T4) are synchronized with determined measuring sectors (S1, S2, S3, S4).

2. . The method according to claim 1 wherein the synchronization between the determined measuring sectors (S1, S2, S3, S4) and determined measuring time windows (T1, T2, T3, T4) is obtained by using a signal representing a cutting moment.

3. . The method according to claim 1 wherein the synchronization between the determined measuring sector (S1, S2, S3, S4) and determined measuring time window (T1, T2, T3, T4) is obtained by using a signal representing a position of a front end (e) of the continuous rod (CR) of the tobacco industry.

4. . The method according to any of claims 1 to 3 wherein measuring within the measuring time windows (T1, T2, T3, T4) is effected at a first frequency.

5. . The method according to any of claims 1 to 4 wherein a determined measuring sector (S1, S2, S3, S4) covers the full length of the product (R).

6. . The method according to any of claims 1 to 4 wherein the method comprises more than one measuring sector (S) and more than one measuring window (T) per product (R).

7. . The method according to claims 1 to 6 wherein the method comprises overlapping measuring sectors (S) and overlapping measuring time windows (T) per product (R).

8. . The method according to any of claims 1 to 7 wherein measuring frequency or measuring accuracy is different in different measuring time windows (T).
